Europäisches Patentamt

European Patent Office

Office européen des brevets

(19)

(11) EP 1 202 576 A2

## (12) EUROPEAN PATENT APPLICATION

(43) Date of publication:
02.05.2002 Bulletin 2002/18

(51) Int Cl.⁷: **H04N 7/26**, H04N 7/30

(21) Application number: **01203586.1**

(22) Date of filing: **13.03.1997**

(84) Designated Contracting States:
**DE ES FR GB IT SE**

(30) Priority: **28.03.1996 EP 96200834**

(62) Document number(s) of the earlier application(s) in accordance with Art. 76 EPC:
**97905352.7 / 0 829 163**

(71) Applicants:
• **Koninklijke Philips Electronics N.V.**
**5621 BA Eindhoven (NL)**
Designated Contracting States:
**DE ES FR GB IT SE**
• **PHILIPS AB**
**164 85 Stockholm (SE)**
Designated Contracting States:
**SE**

(72) Inventors:
• **Breeuwer, Marcel**
**5656 AA Eindhoven (NL)**
• **Klein Gunnewiek, Reinier Bernardus Maria**
**5656 AA Eindhoven (NL)**

(74) Representative:
**Groenendaal, Antonius Wilhelmus Maria**
**INTERNATIONAAL OCTROOIBUREAU B.V.,**
**Prof. Holstlaan 6**
**5656 AA Eindhoven (NL)**

Remarks:
This application was filed on 21 - 09 - 2001 as a divisional application to the application mentioned under INID code 62.

## (54) Method and apparatus for encoding and decoding images

(57)     A method of encoding images (1) including areas (11) of relevant pixels and areas (12) of irrelevant pixels (e.g. a background) is disclosed. The pixels of the irrelevant area are replaced (4) by pseudo-pixels smoothing the transition between said areas. The image thus obtained is subsequently subjected to conventional image coding (5) which now yields considerably fewer bits. At the receiver end, the pseudo-pixels are replaced (9) by predetermined background pixels to reconstruct the original boundaries (13). If the boundary between both areas is not known in advance, the boundary is detected (2), encoded (3) and transmitted to the receiver. The invention is particularly applicable to compression of medical images having circular areas of interest, but may also be used to encode other video images having irrelevant areas such as videophone images in which a head-and-shoulder area constitutes relevant information only.

FIG. 1

**Description**

FIELD OF THE INVENTION

The invention relates to a method of encoding images including areas of relevant image data and areas of irrelevant image data, comprising the step of identifying said irrelevant image data. The invention also relates to a method of decoding encoded images and corresponding arrangements for encoding and decoding.

BACKGROUND OF THE INVENTION

Video images usually have a rectangular shape, but the user is not always interested in the whole rectangular image area. For example, medical images often comprise medically relevant information in a circular area. The images thus exhibit a sharp transition between this circular area and an irrelevant (usually black) background. German Patent DE-A- 36 13 759 discloses a method of recording such images. Data compression is herein achieved by omitting the pixels of the irrelevant image areas. The boundary between the relevant image area and the irrelevant image area is known in advance to both the transmitter and the receiver. The receiver thus knows for each received pixel its display position on the screen.

Currently, video images are often encoded and compressed by encoding methods such as block transform coding or DPCM which exploit the correlation between contiguous pixels within an image. In such encoding methods, sharp transitions between contiguous pixels require a large number of bits. The boundaries between relevant and irrelevant areas in the abovementioned types of images thus affect the coding efficiency considerably.

US-A- 5 267 333 discloses an image compressing apparatus that forms a synthetic image from a plurality of image data. The apparatus includes a device for sorting a plurality of image data into a plurality of image types in accordance with at least one of a nature and a use of each image data, a device for selecting an image compressing method out of a plurality of predetermined various image compressing methods for each image data in accordance with the sorted image type, and a device for compressing the image data in accodance with the selected image compressing method and recording the compressed image data in a recording medium. Further, this document discloses: sorting a plurality of image data into a pictorial part and a total background image; distinguishing an object image from a component background image in the pictorial parts and forming a region information which indicates whether each pixel in the pictorial parts belongs to the object image or the component background image.

OBJECT AND SUMMARY OF THE INVENTION

It is an object of the invention to provide encoding images by which the coding efficiency is improved. To this end, the invention provides a method of transmitting or recording, an apparatus for transmitting or recording, a method of receiving, a receiver, a method of encoding, an encoder, a method of decoding, a decoder, a signal, a storage medium and a system as defined in the independent claims. Advantageous embodiments are defined in the dependent claims.

According to an aspect of the invention, at least irrelevant image data next to a boundary between areas of relevant image data and areas of irrelevant image data is replaced by pseudo-image data smoothing the transition between relevant and irrelevant image data. Experiments have shown that medical images can now be encoded at a 30% lower bit rate. In a corresponding method of decoding images pseudo-image data is identified in response to boundary information and said pseudo-image data is replaced by predetermined image data. The sharp boundaries between areas of relevant image data and areas of predetermined image data are thus reconstructed. The reconstructed image has the same appearance as the original image, which a medical specialist is used to seeing.

BRIEF DESCRIPTION OF THE DRAWINGS

Fig.1 shows a diagram of a system adapted to encode and decode video images according to the invention.
Figs.2A-2E show signal waveforms illustrating the operation of embodiments of a modifying circuit shown in Fig.1.
Figs. 3A-3C show image areas further illustrating the operation of a particular embodiment of the modifying circuit shown in Fig.1.

DESCRIPTION OF PREFERRED EMBODIMENTS

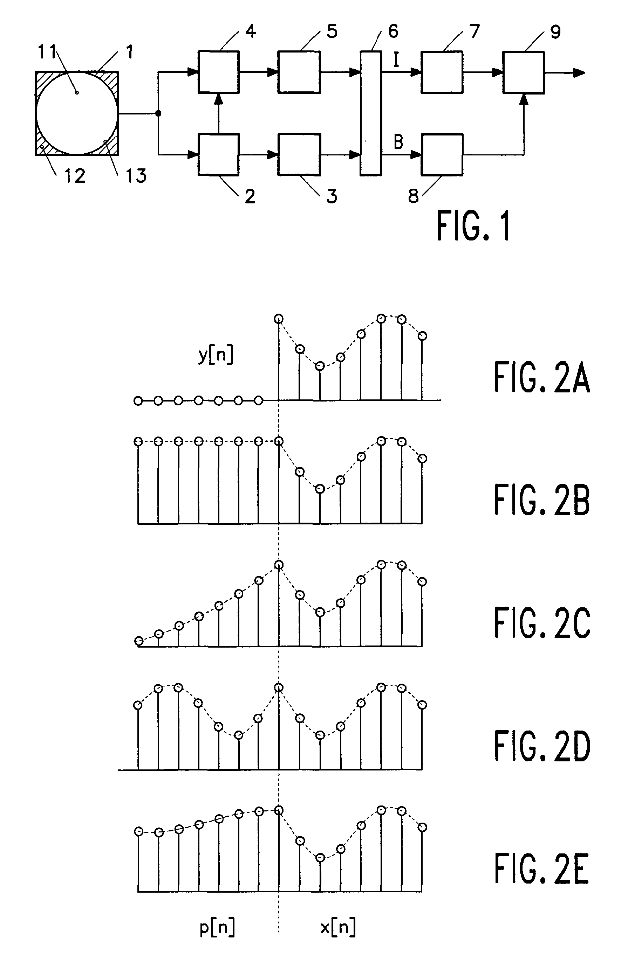

Fig.1 shows a diagram of a system for encoding and decoding video images according to the invention. Reference numeral 1 denotes a rectangular image to be encoded. As has been attempted to show in Fig. 1, the image comprises a circular image area 11 of relevant pixels and an image area 12 of irrelevant pixels. The boundary between both areas is denoted by the reference numeral 13. Hereinafter, relevant pixels will be denoted by x[i,j] and irrelevant pixels will be denoted by y[i,j]. Pseudo-pixels will be denoted by p[i,j].

The image is applied to a boundary detection circuit 2 which is adapted to detect boundary 13, e.g. detect abrupt transients from (black) pixels having a background value to relevant pixels and vice versa. A practical embodiment of boundary circuit 2 is disclosed in US patent 5,014,198. Boundary 13 is losslessly encoded by a boundary encoding stage 3 and transmitted or recorded. Lossless encoding methods are known in the art. For example, run-length coding can be applied to a mask defining the area of irrelevant pixels. If the area of relevant pixels is circular, only the centre and radius of a circle need to be transmitted. Boundary detection circuit 2 and encoding stage 3 can be omitted if the boundaries are known in advance.

Image 1 is further applied to a modifying circuit 4. This circuit receives boundary information from boundary detection circuit 2 and determines, in response thereto, whether applied pixels are relevant pixels from area 11 or irrelevant pixels from area 12. Irrelevant pixels are modified, as will be described hereinafter. The pixels are subsequently applied to a conventional image encoder 5, for example a block-based transform encoder or a DPCM encoder. The encoded boundary information B and image information I are stored on a storage medium for later retrieval, or transmitted to a remote receiver. The storage or transmission medium is denoted by reference numeral 6.

Embodiments of modifying circuit 4 will now be described in terms of their respective output signals. Practical circuits can easily be designed by those skilled in the art of digital signal processing. Figs.2A-2E show waveforms of the respective signals. For convenience, one-dimensional signals are shown, but it will be appreciated that the modifying operation is preferably applied in the two-dimensional image space. Fig.2A shows the input signal for reference. It comprises a series of irrelevant pixels y[n] and a series of relevant pixels x[n]. The background of the image is here assumed to be black, hence all pixels y[n] have the value of zero. Figs.2B-2E show suitable output signals of the modifying circuit. The respective signals now comprise a series of pseudo-pixels p[n] and the series of relevant pixels x[n].

The waveform shown in Fig.2B is obtained by replacing the irrelevant pixels y[n] by identical pseudo-pixels p[n], the value of which corresponds to the first relevant pixel x[n] beyond the boundary. In the waveform shown in Fig.2C, the pseudo-pixels p[n] are chosen to gradually vary from their original value zero to the value of the first relevant pixel beyond the boundary. In the waveform of Fig.2D, the relevant image signal portion is mirrored into the irrelevant area. In addition, the pseudo-signal portion can optionally be low-pass filtered to further smooth the transition, so that significant AC coefficients are prevented from occurring and the coding efficiency is further improved. The waveform of Fig.2E shows pseudo-pixels p[n] obtained by extrapolating the pixels x[n] of the relevant area into the irrelevant area.

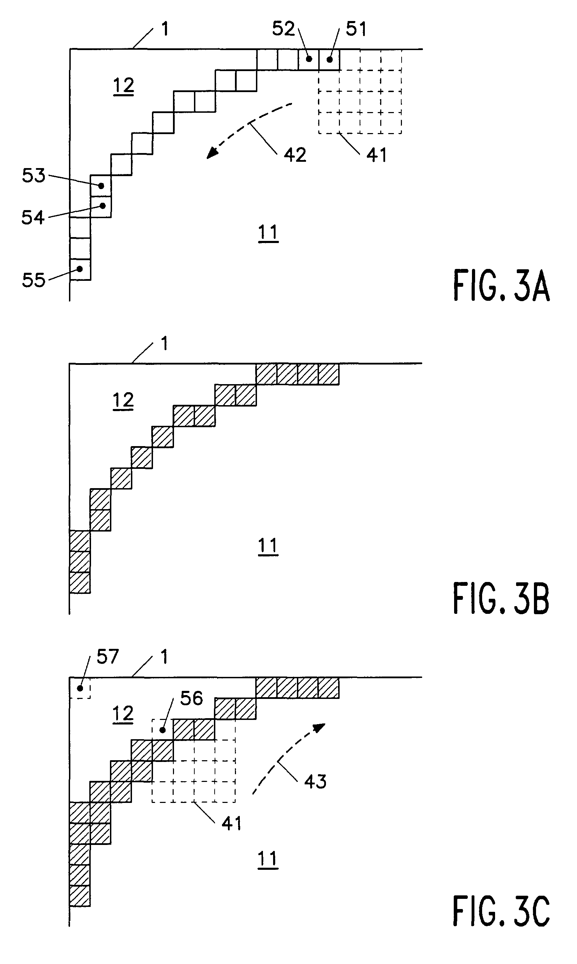

The extrapolation as shown in Fig.2E will now be described for the two-dimensional image space. In Figs. 3A-3C, the top-left corner of a rectangular image is shown. In Fig.3A, a pixel block 41 having an adequate size (here a 4*4 block is shown) is initially chosen to be such that the block includes a single irrelevant pixel 51 in the top left corner. The irrelevant pixel y[i,j] is then replaced by a pseudo-pixel p[i,j] having the average value of all other pixels in the block. In a mathematical notation, this is:

$$p[i,j] = \frac{1}{N^2 - 1} \sum_{n,m \neq 0,0} x[n,m]$$

in which n and m (n, m = 0..N) denote pixel locations in the N*N block. The above operation is repeated for all irrelevant pixels y[i,j] along the boundary between relevant area 11 and irrelevant area 12 until the last irrelevant pixel 55 has been processed. Block 41 thus moves along the boundary as indicated by arrow 42. While the block proceeds, it may include pseudo-pixels generated beforehand, as well as irrelevant pixels not yet replaced. When pixel 52 is being extrapolated, the block also includes pseudo-pixel 51. When pixel 53 is being processed, the block also includes irrelevant pixel 54. Pseudo-pixels are incorporated in the averaging step, irrelevant pixels are not.

Fig.3B shows the situation after all boundary pixels y[i,j] have been replaced by pseudo-pixels p[i,j] (shown shaded). The block then moves in a reverse direction along the new boundary thus created. Fig.3C shows the situation at a further stage of the process. Irrelevant pixel 56 is now being replaced by the average of pixels in block 41 and the block is now moving along the boundary as indicated by arrow 43. As the extrapolation process proceeds, more pseudo-pixels will be included in block 41. Eventually, the vertex 57 of the rectangular image is reached. By then, all pseudo-pixels will have obtained nearly the same value. Image area 12 can thus be encoded very efficiently. The extrapolated image area can be further smoothed by using a 2-dimensional low-pass filter. This smoothing ensures that the extrapolated area does not contain a significant amount of energy.

Reverting now to Fig.1, a method of decoding will be described. A conventional decoder 7 (e.g. a block-based transform decoder or DPCM decoder) carries out the inverse operation of encoder 5 at the transmitter end. Decoder 7 thus reconstructs the pixels as transmitted by the encoder. If they are displayed on the screen in an unaltered form, the pseudo-pixels will cause an image to appear, which the viewer (here a medical specialist) is not familiar with. A boundary decoder 8 receives the codewords B representing the boundary between relevant and pseudo-data. Alternatively, the boundaries are known in advance, in which case they are locally stored. The decoded pixels and boundary information are applied to a reconstruction circuit 9. In response to the boundary information, the reconstruction circuit identifies which pixels are pseudo-pixels p[i,j] and which are relevant pixels x[i,j]. As will be appreciated in view of the foregoing description, the reconstruction circuit 9 does not affect pixels other than pseudo-pixels. The pseudo-image pixels are replaced by predetermined image data, e.g. black pixels. The image thus reconstructed exhibits the same sharp boundaries as the original image.

The conventional video encoder 5 (Fig.1) may be a block transform encoder. In that case, the video image is divided into image blocks which are subjected to a given orthogonal transform such as the well-known Discrete Cosine Transform. Most blocks will comprise relevant pixels only, others will comprise irrelevant pixels only, and so-called "mixed blocks" will comprise both relevant and irrelevant image data. The above-described replacement of irrelevant pixels by pseudo-pixels now needs to be applied to mixed blocks only. The blocks comprising irrelevant pixels only do not need to be transformed at all. They can either be ignored, or encoded into a single DC coefficient (preferably zero, e.g. black).

In summary, a method of encoding images including areas of relevant pixels and areas of irrelevant pixels (e.g. a background) is disclosed. The pixels of the irrelevant area are replaced by pixels smoothing the transition between said areas. The image thus obtained is subsequently subjected to conventional image coding which now yields considerably fewer bits. At the receiver end, the pseudo-pixels are replaced by predetermined background pixels to reconstruct the original boundaries. If the boundary between both areas is not known in advance, the boundary is detected, encoded and transmitted to the receiver. The invention is particularly applicable to compression of medical images having circular areas of interest, but may also be used to encode other video images having irrelevant areas such as videophone images in which a head-and-shoulder area constitutes relevant information only.

**Claims**

1. Method of transmitting or recording an encoded image signal, the method comprising:

   encoding images including areas (11) of relevant image data and areas (12) of irrelevant image data to obtain the encoded image signal, the encoding comprising the step of identifying (2) said irrelevant data,

   **characterized in that** the encoding further comprises replacing (4) at least irrelevant image data next to a boundary (13) between said areas by pseudo-image data smoothing the transition between the relevant image data and the irrelevant image data.

2. Method of transmitting or recording as claimed in claim 1, wherein the encoding comprises detecting (2) and encoding (3) the boundary between said areas to obtain encoded boundary information (B) which is transmitted or recorded.

3. An apparatus for transmitting or recording an encoded image signal, the apparatus comprising:

   an encoder for encoding images including areas (11) of relevant image data and areas (12) of irrelevant image data to obtain the encoded image signal, the encoder comprising means for identifying (2) said irrelevant data,

   **characterized in that** the encoder further comprises means for replacing (4) at least irrelevant image data next to a boundary (13) between said areas by pseudo-image data smoothing the transition between the relevant image data and the irrelevant image data.

4. An apparatus for transmitting or recording as claimed in claim 3, wherein the encoder comprises means for detecting (2) and means for encoding (3) the boundary between said areas to obtain encoded boundary information (B) which is transmitted or recorded.

5. Method of receiving an encoded image signal, the encoded image signal representing an image including areas of relevant image data and areas of irrelevant data, the method of receiving comprising decoding the encoded image signal, the decoding being **characterized by** comprising identifying (8) pseudo-image data in response to boundary information and replacing (9) said pseudo-image data by predetermined image data.

6. Method of receiving as claimed in claim 5, **characterized by** receiving (8) encoded boundary information and decoding (8) said boundary information.

7. A receiver for receiving an encoded image signal, the encoded image signal representing an image including areas of relevant image data and areas of irrelevant data, the receiver comprising a decoder for decoding the encoded image signal, the decoder being **characterized by** comprising means for identifying (8) pseudo-image data in response to boundary information and means for replacing (9) said pseudo-image data by predetermined image data.

8. A receiver as claimed in claim 7, **characterized by** comprising means for receiving (8) encoded boundary information and means for decoding (8) said boundary information.

9. A system comprising an apparatus as claimed in claim 3 and a receiver as claimed in claim 7.

10. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein the encoding comprises detecting (2) and losslessly encoding (3) the boundary between said areas.

11. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein the encoding is a block-based transform encoding.

12. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein a value of the pseudo-image data corresponds to a first relevant pixel beyond the boundary.

13. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein a pseudo-pixels are chosen that gradually vary from an original value zero to a value of a first relevant pixel beyond the boundary.

14. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein the relevant image signal portion is mirrored into the irrelevant area.

15. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein pseudo pixels are obtained by extrapolating pixels of the relevant area into the irrelevant area.

16. Method of encoding as claimed in claim 15, wherein the extrapolating comprises choosing a block including an irrelevant pixel and replacing the irrelevant pixel by a pseudo-pixel having an average value of all other pixels in the block.

17. A method of encoding images including areas (11) of relevant image data and areas (12) of irrelevant image data, the encoding comprising the step of identifying (2) said irrelevant data,

**characterized by** replacing (4) at least irrelevant image data next to a boundary (13) between said areas by pseudo-image data smoothing the transition between the relevant image data and the irrelevant image data, wherein the pseudo-signal portion is low-pass filtered to further smooth the transition.

18. Method of encoding images including areas (11) of relevant image data and areas (12) of irrelevant image data to obtain the encoded image signal, the encoding comprising the step of identifying (2) said irrelevant data,

**characterized in that** the encoding further comprises replacing (4) at least irrelevant image data next to a boundary (13) between said areas by pseudo-image data smoothing the transition between the relevant image data and the irrelevant image data, wherein the method of encoding comprises:

dividing a video image into image blocks, some image blocks comprising relevant pixels only, other blocks comprising both relevant image data and irrelevant image data, replacing the irrelevant pixels by pseudo-pixels, and subjecting the image blocks to an orthogonal transform such as a Discrete Cosine Transform.

19. An encoder for encoding images including areas (11) of relevant image data and areas (12) of irrelevant image data, the encoder comprising means for identifying (2) said irrelevant data,

**characterized by** means for replacing (4) at least irrelevant image data next to a boundary (13) between said areas by pseudo-image data smoothing the transition between the relevant image data and the irrelevant image data, wherein the encoder comprises means for detecting (2) and means for losslessly encoding (3) the boundary between said areas.

20. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein the encoder is a block-based transform encoder.

21. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein a value of the pseudo-image data corresponds to a first relevant pixel beyond the boundary.

22. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein a pseudo-pixels are chosen that gradually vary from an original value zero to a value of a first relevant pixel beyond the boundary.

23. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein the relevant image signal portion is mirrored into the irrelevant area.

24. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein pseudo pixels are obtained by extrapolating pixels of the relevant area into the irrelevant area.

25. An encoder for encoding images including areas (11) of relevant image data and areas (12) of irrelevant image data, the encoder comprising means for identifying (2) said irrelevant data, **characterized by** means for replacing (4) at least irrelevant image data next to a boundary (13) between said areas by pseudo-image data smoothing the transition between the relevant image data and the irrelevant image data, wherein the pseudo-signal portion is low-pass filtered to further smooth the transition.

26. An encoder for encoding images including areas (11) of relevant image data and areas (12) of irrelevant image data to obtain the encoded image signal, the encoder comprising means for identifying (2) said irrelevant data, **characterized in that** the encoder further comprises means for replacing (4) at least irrelevant image data next to a boundary (13) between said areas by pseudo-image data smoothing the transition between the relevant image data and the irrelevant image data, wherein the encoder comprises:

   means for dividing a video image into image blocks, some image blocks comprising relevant pixels only, other blocks comprising both relevant image data and irrelevant image data,
   means for replacing the irrelevant pixels by pseudo-pixels, and
   means for subjecting the image blocks to an orthogonal transform such as a Discrete Cosine Transform.

27. An apparatus for transmitting or recording, the apparatus comprising an encoder according to any of the claims 19-26

28. A method of decoding images including areas (11) of relevant image data and areas (12) of irrelevant image data, **characterized by** identifying (8) pseudo-image data in response to boundary information and replacing (9) said pseudo-image data by predetermined image data, wherein said predetermined image data are predetermined background pixels.

29. A method of decoding images including areas (11) of relevant image data and areas (12) of irrelevant image data, **characterized by** identifying (8) pseudo-image data in response to boundary information and replacing (9) said pseudo-image data by predetermined image data, the decoding comprising an inverse block-based transform operation such as an Inverse Discrete Cosine Transform to obtain reconstructed pixels prior to said identifying step.

30. A method of decoding images including areas (11) of relevant image data and irrelevant image data, **characterized by** identifying (8) pseudo-image data in response to boundary information and replacing (9) said pseudo-image data by predetermined image data, wherein the method comprises receiving losslessly encoded boundary information and decoding (8) said boundary information.

31. A decoder for decoding images including areas (11) of relevant image data and areas (12) of irrelevant image data, the decoder **characterized by** comprising:

means for identifying (8) pseudo-image data in response to boundary information and means for replacing (9) said pseudo-image data by predetermined image data, wherein said predetermined image data are predetermined background pixels.

32. A decoder for decoding images including areas (11) of relevant image data and areas (12) of irrelevant image data, the decoder **characterized by** comprising:

means for identifying (8) pseudo-image data in response to boundary information and means for replacing (9) said pseudo-image data by predetermined image data, the decoding comprising an inverse block-based transform operation such as an Inverse Discrete Cosine Transform to obtain reconstructed pixels prior to said identifying step.

33. A decoder for decoding images including areas (11) of relevant image data and irrelevant image data, the decoder **characterized by** comprising:

means for identifying (8) pseudo-image data in response to boundary information and means for replacing (9) said pseudo-image data by predetermined image data, wherein the decoder comprises means for receiving losslessly encoded boundary information and means for decoding (8) said boundary information.

34. A receiver comprising a decoder as claimed in any of the claims 31-33.

35. A system for encoding and decoding video images, the system comprising an apparatus as claimed in claim 27 and a receiver as claimed in claim 34.

36. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, which signal includes losslessly encoded boundary information (B) defining the boundary between said areas.

37. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein the image has been encoded by a block-based transform encoding.

38. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein a value of the pseudo-image data corresponds to a first relevant pixel beyond the boundary.

39. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein a pseudo-pixels have been chosen that gradually vary from an original value zero to a value of a first relevant pixel beyond the boundary.

40. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein the relevant image signal portion has been mirrored into the irrelevant area.

41. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein pseudo pixels have been obtained by extrapolating pixels of the relevant area into the irrelevant area.

42. An encoded image signal representing an image including areas of relevant image data and areas of irrelevant data, **characterized in that** at least irrelevant image data next to a boundary (13) between said areas has been replaced by pseudo-image data smoothing the transition between relevant and irrelevant image data, wherein the pseudo-signal portion has been low-pass filtered to further smooth the transition.

43. A digital storage medium (6) on which a signal as claimed in any of the claims 36-42 has been stored.

FIG. 1

FIG. 2A

FIG. 2B

FIG. 2C

FIG. 2D

FIG. 2E

FIG. 3A

FIG. 3B

FIG. 3C